# EUROPEAN PATENT APPLICATION

(11) **EP 4 129 052 A1**
(43) Date of publication of application: **08.02.2023**
(21) Application number: 20926508.1
(22) Date of filing: 19.05.2020
(51) Int. Cl.: A01K 5/02, A01K 5/00

(54) **VISION-BASED INDOOR NAVIGATION SYSTEM AND INDOOR NAVIGATION METHOD**

(30) Priority: 23.03.2020 CN 202010207080
(71) Applicant: FJ Dynamics Technology Co., Ltd, Xiangyang, Hubei 441100 (CN)
(72) Inventor: WU, Di, Hubei 441100 (CN); ZHAO, Wenquan, Hubei 441100 (CN); CHEN, Liang, Hubei 441100 (CN); ZHANG, Qichang, Hubei 441100 (CN); XIAO, Wenfang, Hubei 441100 (CN); YANG, Zhi, Hubei 441100 (CN); YAO, Yuan, Hubei 441100 (CN)
(74) Representative: Zaboliene, Reda
(86) International application number: PCT/CN2020/090934
(87) International publication number: WO 2021/189627

(57) **Abstract**

Disclosed are an indoor navigating system and an indoor navigating method based on vision. The indoor navigating method comprises capturing a material channel image; segmenting the material channel image to obtain a material pushing machine and a walkable area from the material channel image, and determining boundaries of the material pushing machine and boundaries of the walkable area; obtaining a distance between a left boundary of the material pushing machine and a left rail of a material channel and/or a distance between a right boundary of the material pushing machine and a right rail of the material channel; obtaining a lateral deviation distance of the material pushing machine, and determining a course angle; and adjust an actual moving direction of the material pushing machine according to the course angle.

## Description

### TECHNICAL FIELD

The present disclosure relates to an indoor navigating system, in particular to an indoor navigating system and an indoor navigating method based on vision.

### BACKGROUND

Recently, for needs of technology developing and industry upgrading, more and more smart devices aiming at improving manufacturing efficiency and decreasing human cost are used for daily life, which providing convenience for people's work and life. Such as material pushing machines used in breeding bases can automatically push forage away from a handrail (fold yard) towards the handrail, for feeding domestic animals (such as cows) kept in a breeding circle surrounded by the handrails. The material pushing machine can be a smart device applied in an indoor occasion, which needs positioning and navigation during working, for conveniently determining indoor position of the material pushing machine and planning walking paths of the material pushing machine in the indoor occasion. Present navigation technology applied indoor includes laser navigation technology, magnetic navigation technology, Ultra Wide band (UWB) navigation technology, and WiFi navigation technology, which can be used for positioning the smart device in the indoor occasion and planning the walking paths of the smart device in the indoor occasion, but there are some defects for these navigation technologies. In detail, for the laser navigation technology, it is capable of precisely positioning the smart device in the indoor occasion and planning the walking paths of the smart device in the indoor occasion, but it is expensive of making the laser navigation technology. For the magnetic navigation technology, it is low cost, but it needs to preset magnetic nails or magnetic bars in the indoor occasion, which may easily break the original architecture and it is complicated for construction. For the UWB navigation technology, the precisions of positioning and navigation of the smart device may easily affected by other signals. And the WiFi navigation technology is bad at precisions of positioning and navigation, which is not suitable for occasions requiring high precision.

### SUMMARY OF THE INVENTION

One of the main advantages of the present disclosure is to provide an indoor navigating system and an indoor navigating method based on vision, wherein the indoor navigating system is realized based on visual technology, comparing to the laser navigation technology, the indoor navigating system of the present disclosure ensures an accuracy and a navigating precision and is low cost.

One of the main advantages of the present disclosure is to provide an indoor navigating system and an indoor navigating method based on vision, wherein the indoor navigating system is realized based on visual technology, comparing to the magnetic navigation technology, the indoor navigating system of the present disclosure does not need to preset magnetic nails or magnetic bars in the indoor occasion, so as to decrease the difficulty of construction and not breaking the original architecture.

One of the main advantages of the present disclosure is to provide an indoor navigating system and an indoor navigating method based on vision, wherein the indoor navigating system is realized based on visual technology, comparing to the magnetic navigation technology, the indoor navigating system of the present disclosure has greater flexibility, such as when the indoor navigating system is applied in a breeding base, even though a size and a position of a breeding circle of the breeding base are adjusted, the indoor navigating system of the present disclosure does not need to make any adjustment for navigating the material pushing machine of the breeding base.

One of the main advantages of the present disclosure is to provide an indoor navigating system and an indoor navigating method based on vision, wherein the indoor navigating system is realized based on visual technology, comparing to the UWB navigation technology, the indoor navigating system of the present disclosure may not affected by other signals, so as to ensure a reliability and a stability of the indoor navigating system.

One of the main advantages of the present disclosure is to provide an indoor navigating system and an indoor navigating method based on vision, wherein the indoor navigating system is applied to a material pushing machine, to allow the material pushing machine automatically pushes the forage from positions away from rails to suitable positions close to the rails, so as to feed the domestic animals kept in the breeding circle surrounded by the rails.

One of the main advantages of the present disclosure is to provide an indoor navigating system and an indoor navigating method based on vision, wherein the indoor navigating system includes a walking device and a material pushing device arranged on the walking device, when the material pushing device moves along a path by navigation, the material pushing device pushes the forage by rotation, thus the forage is pushed to positions close to the rails.

One of the main advantages of the present disclosure is to provide an indoor navigating system and an indoor navigating method based on vision, wherein an annular wall body of the material pushing machine may be driven and automatically rotates, so as to enforce the material pushing machine, to efficiently push the forage.

On one hand of the present disclosure, an indoor navigating system based on vision is provided, the indoor navigating system includes:
an image capturing unit configured to capture a material channel image;
an image segmenting unit configured to segment the material channel image to obtain a material pushing machine and a walkable area from the material channel image, and determine boundaries of the material pushing machine and boundaries of the walkable area;
a position obtaining unit configured to obtain a distance between a left boundary of the material pushing machine and a left rail of a material channel and/or a distance between a right boundary of the material pushing machine and a right rail of the material channel;
a course angle obtaining unit configured to, based on the distance between the left boundary of the material pushing machine and the left rail of the material channel and/or the distance between the right boundary of the material pushing machine and the right rail of the material channel, obtain a lateral deviation distance of the material pushing machine, and obtain a course angle based on the lateral deviation distance; and
a controlling unit configured to, based on the course angle, adjust an actual moving direction of the material pushing machine.

According to an embodiment of the present disclosure, the position obtaining unit is further configured to obtain a distance between a front boundary of the material pushing machine and a front boundary of the material channel, the controlling unit compares the distance between the front boundary of the material pushing machine and the front boundary of the material channel with a predetermined distance, and controls an operating status of the material pushing machine according to a comparing result.

According to an embodiment of the present disclosure, the image segmenting unit determine the boundaries of the material pushing machine and the boundaries of the walkable area through pixel searching.

According to an embodiment of the present disclosure, the image capturing unit captures the material channel image through at least one camera device, the position obtaining unit obtains the distance between the left boundary of the material pushing machine and the left rail of the material channel and/or the distance between the right boundary of the material pushing machine and the right rail of the material channel according to a height of the camera device, an intersection angle of an optical axis of the camera device and a ground, and parameters of the camera device.

According to an embodiment of the present disclosure, the position obtaining unit, according to a space between neighboring camera devices, determines the camera device for obtaining the distance between the left boundary of the material pushing machine and the left rail of the material channel and/or the distance between the right boundary of the material pushing machine and the right rail of the material channel.

According to an embodiment of the present disclosure, the material pushing machine includes a walking device and a material pushing device, the walking device includes a holding assembly, a power supply assembly, two walking drive motors, two drive wheels, and a supporting wheel, the holding assembly includes a base plate, the power supply assembly is arranged on and supported by the base plate, each of the walking drive motors is arranged on one of opposite ends of the base plate, and each of the walking drive motors is electrically connected to the power supply assembly, each of the drive wheels is connected to each of the walking drive motors, the supporting wheel is mounted in a middle of the base plate on another side, the material pushing device includes a material pushing wall, the material pushing wall includes an annular wall body and a connecting arm extending from a top to a middle of the annular wall body, the connecting arm is connected to the holding assembly, and the annular wall body rotatably surrounds the holding assembly.

According to an embodiment of the present disclosure, the holding assembly includes at least two support columns, a holding platform, a mounting column, and a drive ring; each of the at least two support columns is extended from an edge of the base plate to a predetermined height, the holding platform is arranged on a top end of the each of the at least two support columns, a receiving space is formed between the base plate and the holding platform for receiving the power supply assembly, the mounting column is arranged from a center position of the holding platform extending upwardly, the drive ring is rotatably mounted to the mounting column, the connecting arm is connected to the drive ring.

According to an embodiment of the present disclosure, the material pushing device further includes at least two pulley structures, each of the at least two pulley structures includes a mounting body and a pulley body rotatably mounted on the mounting body, the pulley body outwardly resists to an interior of the annular wall body, so each of the at least two pulley structures is mounted to the holding assembly.

According to an embodiment of the present disclosure, the material pushing machine further includes a cover device, wherein the cover device includes a cover, the cover is mounted on the holding assembly, a periphery of the cover extends outwardly, a diameter of the cover is greater than the periphery of the annular wall body.

On another hand of the present disclosure, an indoor navigating method based on vision is provided, the indoor navigating method includes:
(a) capturing a material channel image;
(b) segmenting the material channel image to obtain a material pushing machine and a walkable area from the material channel image, and determining boundaries of the material pushing machine and boundaries of the walkable area;
(c) obtaining a distance between a left boundary of the material pushing machine and a left rail of a material channel and/or a distance between a right boundary of the material pushing machine and a right rail of the material channel;
(d) obtaining a lateral deviation distance of the material pushing machine, and determining a course angle; and
(e) adjust an actual moving direction of the material pushing machine according to the course angle.

According to an embodiment of the present disclosure, the indoor navigating method further includes:
(f) obtaining a distance between a front boundary of the material pushing machine and a front boundary of the material channel; and
(g) comparing the distance between the front boundary of the material pushing machine and the front boundary of the material channel with a predetermined distance, when determining that the distance between the front boundary of the material pushing machine and the front boundary of the material channel is greater than the predetermined distance, controlling the material pushing machine to continuously operate, when determining that the distance between the front boundary of the material pushing machine and the front boundary of the material channel is less than the predetermined distance, controlling the material pushing machine to turn direction or stop operating.

According to an embodiment of the present disclosure, in the step (b), determining the boundaries of the material pushing machine and the boundaries of the walkable area through pixel searching.

According to an embodiment of the present disclosure, in the step (a), capturing the material channel image through at least one camera device; in the step (c), obtaining the distance between the left boundary of the material pushing machine and the left rail of the material channel and/or the distance between the right boundary of the material pushing machine and the right rail of the material channel according to a height of the camera device, an intersection angle of an optical axis of the camera device and a ground, and parameters of the camera device.

According to an embodiment of the present disclosure, in the step (c), according to a space between neighboring camera devices, determines the camera device for obtaining the distance between the left boundary of the material pushing machine and the left rail of the material channel and/or the distance between the right boundary of the material pushing machine and the right rail of the material channel.

### BRIEF DESCRIPTION OF THE DRAWINGS

FIG. 1 is a schematic diagram of an indoor navigating system based on vision according to an embodiment of the present disclosure.
FIG. 2 is a schematic diagram of an application scene of the indoor navigating system based on vision according to the embodiment of the present disclosure.
FIG. 3 show a top view of the application scene of the indoor navigating system based on vision according to an embodiment of the present disclosure.
FIG. 4 show a front view of the application scene of the indoor navigating system based on vision according to an embodiment of the present disclosure.
FIG. 5 is a flowchart of the indoor navigating system based on vision according to an embodiment of the present disclosure.
FIGS. 6A and 6B are schematic diagrams of a material pushing machine from different angles according to an embodiment of the present disclosure.
FIG. 7 is an exploded diagram of the material pushing machine according to an embodiment of the present disclosure, showing a structural relationship of a walking device and a material pushing device of the material pushing machine.
FIG. 8 is a partial schematic diagram of the material pushing machine, showing a structural relationship of the walking device and a material pushing wall of the material pushing device.
FIG. 9 is a partial exploded diagram of the material pushing machine according to an embodiment of the present disclosure, showing structural relationships of the material pushing wall and other components.
FIG. 10 is a partial exploded diagram of the material pushing machine according to an embodiment of the present disclosure, showing structural relationships of the walking device and other components.
FIGS. 11A and 11B are partial diagrams of the material pushing machine from different angles, showing structural relationships of the walking device and other components.
FIGS. 12A to 12F show a material pushing process of the material pushing machine according to an embodiment of the present disclosure.

### DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not depart from the spirit and scope of the present disclosure.

Those skilled in the art should understand that, in the disclosure of the present disclosure, the terms "longitudinal", "lateral", "upper", "lower", "front", "rear", "left", "right", the orientation or positional relationship indicated by "vertical", "horizontal", "top", "bottom", "inner", "outer", etc. are based on the orientation or positional relationship shown in the drawings, which is only for the convenience of describing the present disclosure and to simplify the description, rather than indicating or implying that the device or element referred to must have a specific orientation, or be constructed and operated in a specific orientation, so the above terms should not be understood as limiting the present disclosure.

It can be understood that the term "a" should be understood as "at least one" or "one or more", that is, in one embodiment, the number of an element may be one, and in another embodiment, the number of the elements can be more than one, and the term "one" cannot be taken as a restriction on the number.

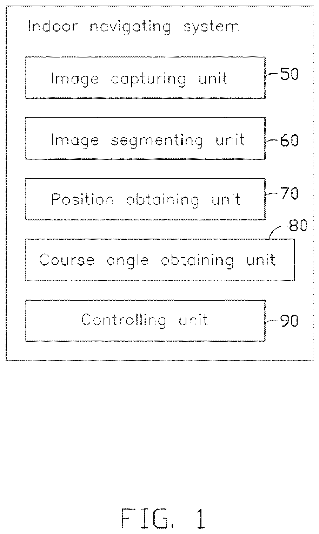

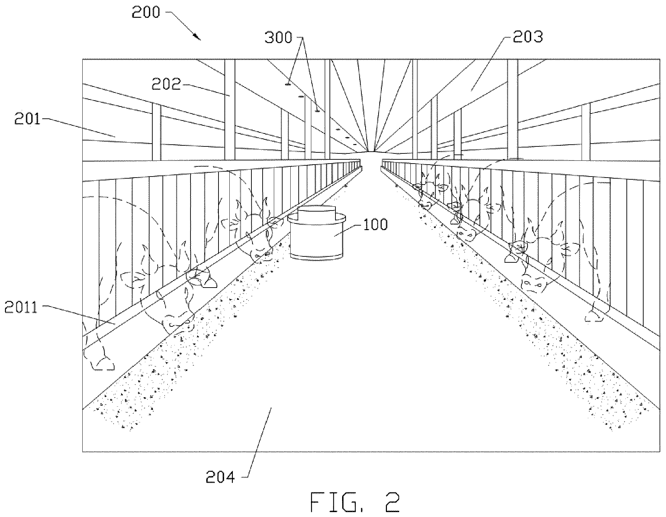

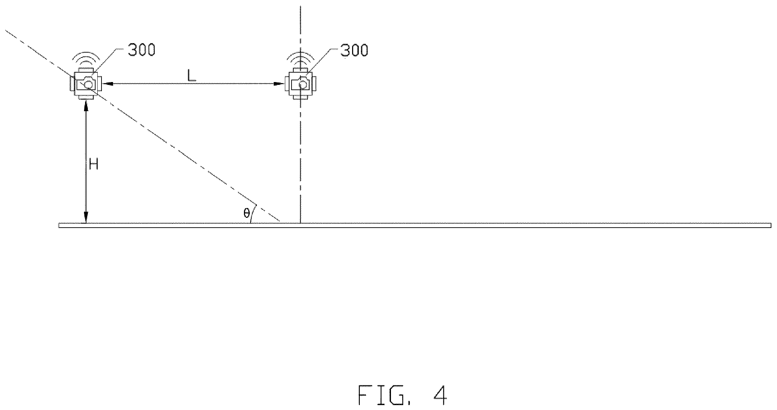

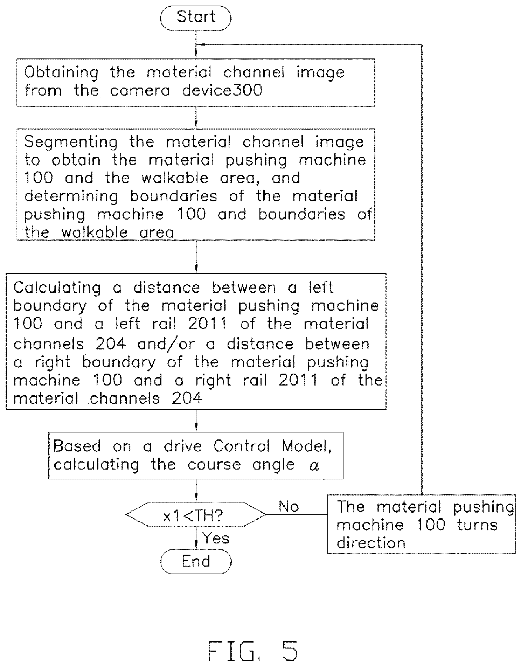

Referring to FIG. 1 to FIG. 5 of the accompanying drawings of the specification of the present disclosure, an indoor navigating system based on vision according to an embodiment of the present disclosure are explained in the following description, the indoor navigating system is configured to precisely position a smart device 100 in an indoor environment 200 and guide a walk of the smart device 100 in the indoor environment 200.

For instance, the indoor navigating system in the embodiment according to the present disclosure, the smart device 100 may be a material pushing machine 100, the indoor environment 200 is formed by a plurality of cow enclosures 201, a plurality of columns 202, a ceiling 203, and a plurality of material channels 204, the plurality of cow enclosures 201 are arranged to form the plurality of material channels 204 between every neighboring cow enclosures 201, the plurality of columns 202 are arranged at intervals to support the ceiling 203 above the cow enclosures 201. When feeding cows in the cow enclosures 201, forage is lay on positions of the material channels 204 close to rails 2011 forming the cow enclosures 201, heads of the cows may reach out of the material channels 204 through spaces between two neighboring cow enclosures 201 to eat the forage closes to the rails 2011. Limited to physiological characteristics, when the cows are eating the forage, the forage may gradually away from the rails 2011, at this time, the material pushing machine 100 walks along outside of the rails 2011 and in the material channels 204 is used to automatically push the forage towards the positions close to the rails 2011. However, during the material pushing machine 100 walks along outside of the rails 2011 and in the material channels 204 to push the forage towards the positions close to the rails 2011, the material pushing machine 100 suffers and pushed by counter-acting force from the forage to be in a trend and displacement of gradually away from the rails 2011, at this time the indoor navigating system may determine a lateral deviation and adjust a walking paths of the material pushing machine 100, so an actual path of the material pushing machine 100 is parallel with the rails 2011, thus, the material pushing machine 100 may automatically push the forage to suitable positions close to the rails 2011.

In detail, the indoor navigating system includes an image capturing unit 50, an image segmenting unit 60, a position obtaining unit 70, a course angle obtaining unit 80, and a controlling unit 90, the image segmenting unit 60 is electrically connected to the image capturing unit 50, the position obtaining unit 70 is electrically connected to the image capturing unit 50 and the image segmenting unit 60, the course angle obtaining unit 80 is electrically connected to the position obtaining unit 70, the controlling unit 90 is electrically connected to the course angle obtaining unit 80, the material pushing machine 100 is controllably connected to the controlling unit 90. The image capturing unit 50 is configured to capture a material channel image, a content of the material channel image includes an image of the material channels 204, an image of the forage lay in the material channels 204, and an image of the material pushing machine 100 positioned in the material channels 204. The image segmenting unit 60 is configured to determine boundaries of the material pushing machine 100 and boundaries of a walkable area in a segmented material channel image, the boundaries of the walkable area is adjacent to and parallel with the material channels 204, so as to determine boundaries of the material channels 204 through determining the boundaries of the walkable area. The position obtaining unit 70 is configured to obtain a distance y1 between a left boundary of the material pushing machine 100 and a left rail 2011 of the material channels 204 and a distance y2 between a right boundary of the material pushing machine 100 and a right rail 2011 of the material channels 204. The course angle obtaining unit 80 is configured to, based on the distance y1 between the left boundary of the material pushing machine 100 and the left rail 2011 of the material channels 204 and/or the distance y2 between the right boundary of the material pushing machine 100 and the right rail 2011 of the material channels 204, obtain a lateral deviation distance Δ y of the material pushing machine 100, and obtain a course angle α based on the lateral deviation distance Δ y of the material pushing machine 100. The controlling unit 90, based on the course angle α , adjusts the walking path of the material pushing machine 100, so the material pushing machine 100 may automatically push the forage to suitable positions close to the rails 2011 of the cow enclosures 201.

In further detail, referring to FIG. 1 to FIG. 5, a plurality of camera devices 300 are arranged on the columns 202 and/or the ceiling 203 of the indoor environment 200, a height H of the camera devices 300, an intersection angle θ of an optical axis of the camera devices 300 and a ground, parameters of the camera devices 300, and a space L between neighboring camera devices 300 are known. The indoor navigating system may be run in a computing device 400. The camera devices 300 may be electrically connected to the computing device 400 through wires or wireless, the material pushing machine 100 is controllably connected to the computing device 400. The material pushing machine 100 is preset a predetermined operating direction, when the material pushing machine 100 operates along the predetermined operating direction, suffering counter-acting force from the forage, the material pushing machine 100 is pushed and in a trend and displacement of gradually away from the rails 2011.

Thus, during an operation process of the material pushing machine 100, the image capturing unit 50 is configured to obtain images captured by the camera devices 300, and obtain the material channel image by fusing the images by a multiple camera fusion algorithm, a content of the material channel image includes an image of the material channels 204, an image of the forage lay in the material channels 204, and an image of the material pushing machine 100 positioned in the material channels 204.

The image segmenting unit 60 may segment the material channel image obtained by the image capturing unit 50 to obtain the material pushing machine 100 and the walkable area based on image segmentation algorithm, and determine the boundaries of the material pushing machine 100 and the boundaries of the walkable area through pixel searching. Moreover, for the image segmenting unit 60 precisely segmenting and obtaining the material pushing machine 100 and the walkable area from the material channel image, labeling the material pushing machine 100 and the walkable area when processing image annotation, for training model, during the later actual use, the image segmenting unit 60 may precisely obtain the boundaries of the material pushing machine 100 and boundaries of the walkable area through pixel searching. For instance, in one embodiment of the present disclosure, the image segmenting unit 60 segments the material channel image to obtain an image area R of the material pushing machine 100 and the walkable area S based on an image segmentation Model, wherein (S, R)=segmentation Model (Img).

The position obtaining unit 70, based on monocular camera ranging, may calculate the distance y1 between the left boundary of the material pushing machine 100 and the left rail 2011 of the material channels 204 and the distance y2 between the right boundary of the material pushing machine 100 and the right rail 2011 of the material channels 204 according to the height H of the camera devices 300, the intersection angle θ of the optical axis of the camera devices 300 and the ground, and the parameters of the camera devices 300. For instance, in one embodiment of the present disclosure, the position obtaining unit 70, based on a dis Compute Model, calculates the distance y1 between the left boundary of the material pushing machine 100 and the left rail 2011 of the material channels 204 and the distance y2 between the right boundary of the material pushing machine 100 and the right rail 2011 of the material channels 204 according to the height H of the camera devices 300, the intersection angle θ of the optical axis of the camera devices 300 and the ground, and the parameters of the camera devices 300, wherein (y1, y2) = dis Compute(S, R, H, θ ).

Preferably, according to the space L between neighboring camera devices 300, the position obtaining unit 70 is configured to determine the neighboring camera device 300 for calculating the distance y1 between the left boundary of the material pushing machine 100 and the left rail 2011 of the material channels 204 and the distance y2 between the right boundary of the material pushing machine 100 and the right rail 2011 of the material channels 204. For instance, when the material pushing machine 100 gradually drives out of a visual field of a first camera device 300 and into a visual field of a second camera device 300, according to the space L between the first camera device 300 and the second camera device 300, the position obtaining unit 70 may determine whether a definition of an image of the material pushing machine 100 captured by the first camera device 300 is higher than a definition of an image of the material pushing machine 100 captured by the second camera device 300. If the position obtaining unit 70 determines that the definition of the image of the material pushing machine 100 captured by the first camera device 300 is higher than the definition of the image of the material pushing machine 100 captured by the second camera device 300, the position obtaining unit 70 may calculate the distance y1 between the left boundary of the material pushing machine 100 and the left rail 2011 of the material channels 204 and the distance y2 between the right boundary of the material pushing machine 100 and the right rail 2011 of the material channels 204 according to the height H of the first camera device 300, the intersection angle θ of the optical axis of the first camera device 300 and the ground, and the parameters of the first camera device 300. Correspondingly, if the position obtaining unit 70 determines that the definition of the image of the material pushing machine 100 captured by the first camera device 300 is lower than the definition of the image of the material pushing machine 100 captured by the second camera device 300, the position obtaining unit 70 may calculate the distance y1 between the left boundary of the material pushing machine 100 and the left rail 2011 of the material channels 204 and the distance y2 between the right boundary of the material pushing machine 100 and the right rail 2011 of the material channels 204 according to the height H of the second camera device 300, the intersection angle θ of the optical axis of the second camera device 300 and the ground, and the parameters of the second camera device 300.

The course angle obtaining unit 80 is configured to, based on the distance y1 between the left boundary of the material pushing machine 100 and the left rail 2011 of the material channels 204 and/or the distance y2 between the right boundary of the material pushing machine 100 and the right rail 2011 of the material channels 204, obtain a lateral deviation distance Δ y of the material pushing machine 100, and obtain a course angle α based on the lateral deviation distance Δ y of the material pushing machine 100. For instance, according to the predetermined operating direction, a distance between the left boundary of the material pushing machine 100 and the left rail 2011 of the material channels 204 the material pushing machine 100 is 50 mm, if the distance y1 between the left boundary of the material pushing machine 100 and the left rail 2011 of the material channels 204 obtained by the position obtaining unit 70 is 60 mm, the course angle obtaining unit 80 may determine the lateral deviation distance Δ y of the material pushing machine 100 is 10 mm. Then, the controlling unit 90, based on the course angle α , may determine an actual moving direction of the material pushing machine 100, to adjust the walking path of the material pushing machine 100, so the material pushing machine 100 may automatically push the forage to suitable positions close to the rails 2011 of the cow enclosures 201. For instance, in one embodiment of the present disclosure, the course angle obtaining unit 80, based on a drive Control Model, calculates the course angle α , wherein α = drive Control(v1, v2).

Furthermore, the position obtaining unit 70 may obtain a distance x between a front boundary of the material pushing machine 100 and a front boundary of the material channels 204, wherein the controlling unit 90 is electrically connected to the position obtaining unit 70, after the position obtaining unit 70 obtains the distance x between a front boundary of the material pushing machine 100 and a front boundary of the material channels 204, the controlling unit 90 compares the distance x between a front boundary of the material pushing machine 100 and a front boundary of the material channels 204 with a predetermined distance TH. If controlling unit 90 determines that the distance x between a front boundary of the material pushing machine 100 and a front boundary of the material channels 204 is greater than the predetermined distance TH, the controlling unit 90 controls the material pushing machine 100 to continuously push the material. Correspondingly, if controlling unit 90 determines that the distance x between a front boundary of the material pushing machine 100 and a front boundary of the material channels 204 is less than the predetermined distance TH, a one-way material pushing operation of the material pushing machine 100 ends, at this time, the material pushing machine 100 turns a direction or stops.

According to another aspect of the present disclosure, the present disclosure further provides an indoor navigating method based on vision, wherein the indoor navigating method includes the following method steps:
(a) obtaining the material channel image;
(b) segmenting the material channel image to obtain the material pushing machine 100 and the walkable area, and determining boundaries of the material pushing machine 100 and boundaries of the walkable area;
(c) obtaining a distance between a left boundary of the material pushing machine 100 and a left rail 2011 of the material channels 204 and/or a distance between a right boundary of the material pushing machine 100 and a right rail 2011 of the material channels 204;
(d) obtaining a lateral deviation distance Δ y of the material pushing machine 100 and determining a course angle α ; and
(e) based on the course angle α , adjusting an actual operating direction of the material pushing machine 100.

Furthermore, the indoor navigating method further includes the following method steps:
(h) obtaining a distance between a front boundary of the material pushing machine 100 and a front boundary of the material channels 204;
(i) comparing the distance between a front boundary of the material pushing machine 100 and a front boundary of the material channels 204 with a predetermined distance TH, if the distance between a front boundary of the material pushing machine 100 and a front boundary of the material channels 204 is greater than the predetermined distance TH, the material pushing machine 100 continuously pushes the material; if the distance between a front boundary of the material pushing machine 100 and a front boundary of the material channels 204 is less than the predetermined distance TH, the material pushing machine 100 turns a direction or stops.

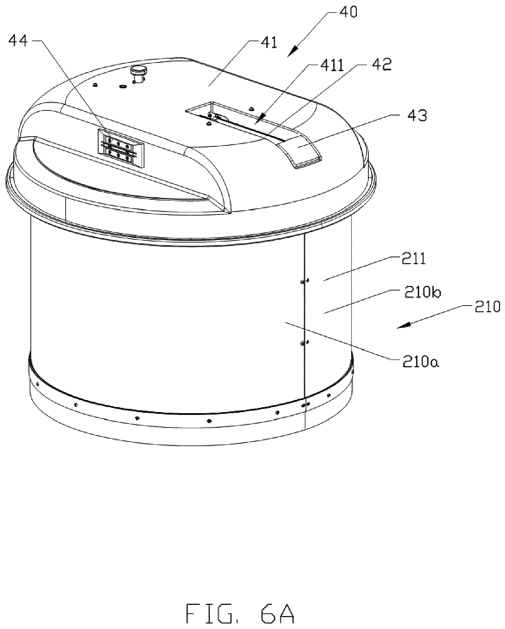

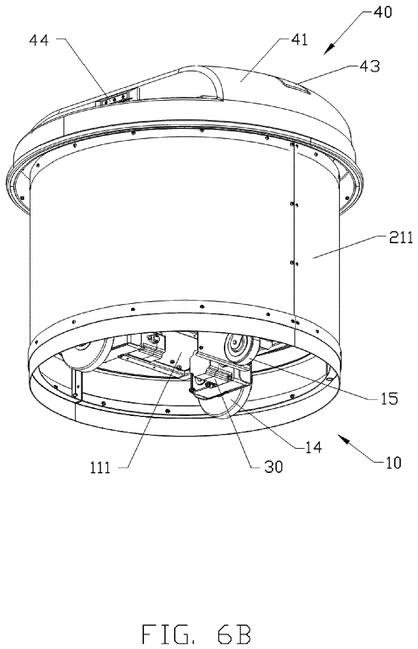

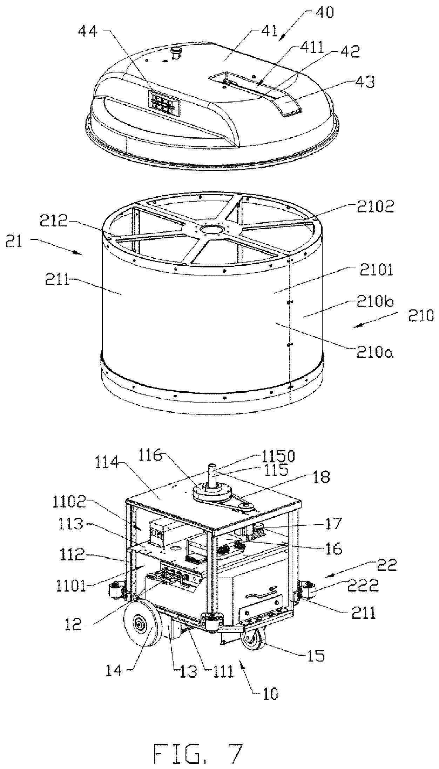

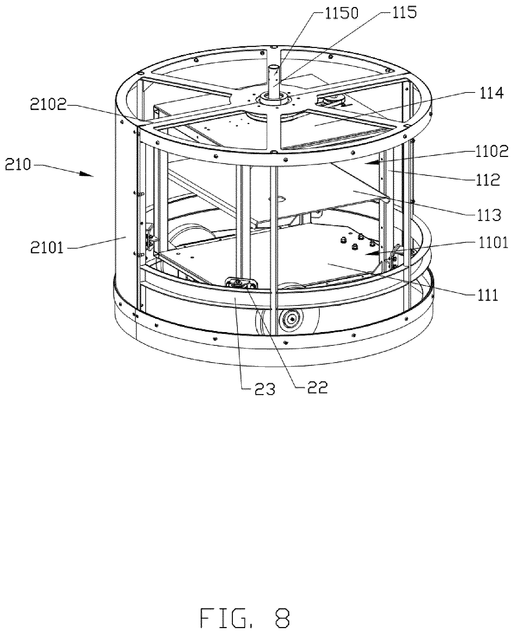

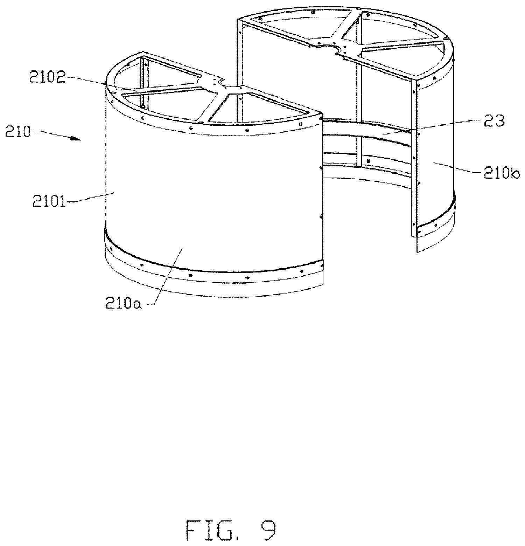

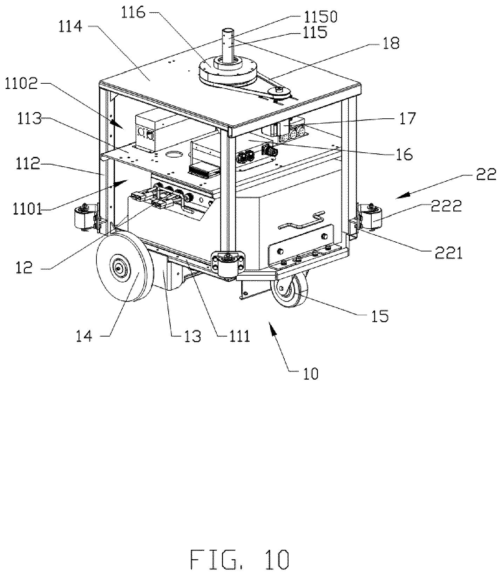

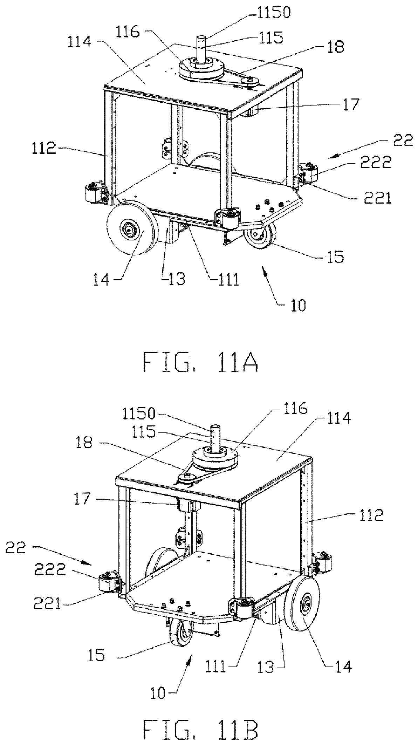

According to FIGS. 6A to FIG 11B of the present disclosure, a material pushing machine 100 according to an embodiment of the present disclosure are explained in the following description, the material pushing machine 100 includes a walking device 10 and a material pushing device 20 arranged on the walking device 10.

In particular, the walking device 10 includes a holding assembly 11, a power supply assembly 12, two walking drive motors 13, two drive wheels 14, and a supporting wheel 15. The holding assembly 11 further includes a base plate 111, the power supply assembly 12 is arranged on and supported by the base plate 111, the charger 200 may automatically supply power for the power supply assembly 12. The two walking drive motors 13 are arranged on opposite ends of the base plate 111, each of the walking drive motors 13 is electrically connected to the power supply assembly 12. The two drive wheels 14 are connected to the walking drive motors 13, the two drive wheels 14 are arranged on opposite ends of the base plate 111. The supporting wheel 15 is mounted in a middle of the base plate 111 on other side, thus the two drive wheels 14 and the supporting wheel 15 form a triangular structure, the two drive wheels 14 and the supporting wheel 15 cooperatively support the base plate 111 above the ground.

Preferably, the two drive wheels 14 are mounted on an output roller of the walking drive motors 13, thus the two drive wheels 14 may be connected to and driven by the walking drive motors 13. The supporting wheel 15 may be a universal wheel able to pivot through 360 degrees, for turning of the material pushing machine 100 in any direction.

It should be known that, a shape of the base plate 111 is not limited, as shown in FIGS. 6A to 11B, the base plate 111 is substantially square, a center of gravity of the power supply assembly 12 coincides with a center of gravity of the base plate 111 in height, thus preventing any decline of a center of gravity of the material pushing machine 100, and ensuring a reliability and a stability of the material pushing machine 100. Preferably, in other embodiments of the material pushing machine 100, the base plate 111 may be, but is not limited to, circular, elliptic, and polygonal.

The material pushing device 20 includes a material pushing wall 21, the material pushing wall 21 includes an annular wall body 211 and a connecting arm 212 extending from a top to a middle of the annular wall body 211. The connecting arm 212 is rotatably amounted on the holding assembly 11, the annular wall body 211 rotatably surrounds the holding assembly 11, thus the material pushing wall 21 forms the exterior of the material pushing machine 100. Thus, when the material pushing machine 100 pushes the materials, forage or other food may not enter interior of the material pushing machine 100, and the walking device 10 will not be affected. For instance, the forage may be straw or a mixture of straw and fodder, the straw is substantially long and thin, the material pushing wall 21 is arranged on outside of the holding assembly 11 and forms the appearance of the material pushing machine 100, which may prevent the forage entering the internal of the material pushing machine 100 and affecting the walking device 10, so as to ensure a reliability and a stability of the material pushing machine 100.

In the material pushing machine 100 of the present disclosure, when the power supply assembly 12 is controlled to provide power for each of the walking drive motors 13, each of the walking drive motors 13 may convert electric energy into kinetic energy to drive each of the drive wheels 14 to run, thus, the walking device 10 may walk or at least follow a path. It should be known that, when rotation speeds of the two walking drive motors 13 are the same, the walking device 10 is configured to walk straight along a path; when rotation speeds of the two walking drive motors 13 are different, the motion of the walking device 10 will be in a curve. For instance, when one of the walking drive motors 13 is rotating, and the other of the walking drive motors 13 is not working, the walking device 10 may make a sharp turn.

A type of the power supply assembly 12 is not limited, such as the power supply assembly 12 may be a storage battery (such as but is not limited to lithium battery), when the electric energy stored in the power supply assembly 12 is consumed, the power supply assembly 12 will replenish electric energy. Or the power supply assembly 12 may include a storage battery (such as but is not limited to lithium battery), when the electric energy stored in the power supply assembly 12 is consumed, the power supply assembly 12 will replenish electric energy.

Furthermore, the walking device 10 includes a controller 16, the power supply assembly 12 and each of the walking drive motors 13 are connected to the controller 16, the controller 16 controls power supply ways of the power supply assembly 12 to the walking drive motors 13. Preferably, the controller 16 is arranged on and supported by the base plate 111. Optionally, the controller 16 is arranged on the power supply assembly 12, or the controller 16 and the power supply assembly 12 are integrated.

A type of the controller 16 is not limited, and may have a calculating function and a controlling function. For instance, the controller 16 may control a power from the power supply assembly 12 to each of the walking drive motors 13 according to a real-time status of the material pushing machine 100, so as to adjust a walking or path of movement of the material pushing machine 100.

Referring to FIGS. 6A to 11B, the holding assembly 11 includes at least two support columns 112, a lower holding platform 113, and an upper holding platform 114. A lower end of each support column 112 is arranged on edges of the base plate 111 and extended from the edges of the base plate 111 to a predetermined height. A periphery of the lower holding platform 113 is arranged in a middle portion of each support column 112, so each support column 112 may support and maintain the lower holding platform 113 on the base plate 111, and a first receiving space 1101 of the holding assembly 11 is formed between the base plate 111 and the lower holding platform 113. A periphery of the upper holding platform 114 is arranged in an upper portion of each support column 112, so each support column 112 may support and maintain the upper holding platform 114 over the lower holding platform 113, and a second receiving space 1102 of the holding assembly 11 is formed between the lower holding platform 113 and the upper holding platform 114.

In other words, the holding assembly 11 has the first receiving space 1101 and the second receiving space 1102. The first receiving space 1101 is formed between the base plate 111 and the lower holding platform 113, for receiving the power supply assembly 12 mounted on the base plate 111. The second receiving space 1102 is formed between the lower holding platform 113 and the upper holding platform 114, for receiving the controller 16 mounted on the lower holding platform 113. It should be known that, other electrical components (such as but is not limited to fuse, power manager, communication module) of the walking device 10 may also be received in the second receiving space 1102 and contained in the lower holding platform 113.

Optionally, in other embodiment of the material pushing machine 100, the holding assembly 11 has only one holding platform, the holding platform is arranged on an upper end of each support column 112, a receiving space is formed between the base plate 111 and the holding platform, the power supply assembly 12 and the controller 16 arranged on the base plate 111 are received in the receiving space.

Particularly, the material pushing machine 100 as shown in FIGS. 6A to 11B, the holding assembly 11 includes four support columns 112, a lower end of each support column 112 is arranged at a corner of the base plate 111. Each corner of the lower holding platform 113 is arranged at middle portion of each support column 112, so each support column 112 may maintain the lower holding platform 113 above the base plate 111, the first receiving space 1101 is formed between the base plate 111 and the lower holding platform 113. Each corner of the upper holding platform 114 is at upper portion of each support column 112, so each support column 112 holds the upper holding platform 114 above the lower holding platform 113, the second receiving space 1102 is formed between the lower holding platform 113 and the upper holding platform 114.

Referring to FIGS. 6A to 11B, the holding assembly 11 further includes a mounting column 115 and a drive ring 116. The mounting column 115 is arranged from a center position of the upper holding platform 114 extending upwardly to form a free end 1150. The drive ring 116 is rotatably mounted to a middle portion of the mounting column 115.

A manner of the mounting column 115 being arranged on the upper holding platform 114 is not limited, for instance, the mounting column 115 and the upper holding platform 114 may be integrally formed, or the mounting column 115 is a screw joint to the upper holding platform 114, or the mounting column 115 is welded to the upper holding platform 114.

A manner of the drive ring 116 being rotatably mounted to the mounting column 115 is not limited, for instance, the drive ring 116 is rotatably mounted to the mounting column 115 through a bearing.

The walking device 10 further includes a material pushing drive motor 17. The material pushing drive motor 17 is arranged on the upper holding platform 114 and electrically connected to the power supply assembly 12, when the power supply assembly 12 supplies power to the material pushing drive motor 17, the material pushing drive motor 17 may convert electric energy into kinetic energy. Preferably, the material pushing drive motor 17 is connected to the controller 16, so the controller 16 may control manner of supplying power to the material pushing drive motor 17. The drive ring 116 is drivable and connected to the material pushing drive motor 17. The connecting arm 212 of the material pushing wall 21 is extended to and fixedly amounted to the drive ring 116. When the power supply assembly 12 supplies power to the material pushing drive motor 17, the material pushing drive motor 17 rotates the drive ring 116 relative to the walking device 10 around periphery of the holding assembly 11.

The walking device 10 further includes a transmission belt 18. Opposite ends of the transmission belt 18 are mounted to an output roller of the material pushing drive motor 17 and the drive ring 116, so the drive ring 116 is drivable and connected to the material pushing drive motor 17. Optionally, in other embodiments of the material pushing machine 100, the output roller of the material pushing drive motor 17 includes a gear structure and the drive ring 116 includes a gear structure, so the gear structure of the drive ring 116 engages with the gear structure of the material pushing drive motor 17, thus the drive ring 116 is drivable and connected to the material pushing drive motor 17.

Referring to FIGS. 6A to 11B, the material pushing device 20 further includes at least two pulley structures 22. Each pulley structure 22 includes a mounting body 221 and a pulley body 222 rotatably mounted on the mounting body 221. The pulley structures 22 are maintained between the annular wall body 211 and the holding assembly 11, the pulley structures 22 are mounted to the holding assembly 11 through the mounting body 221 such that the pulley body 222 resists the annular wall body 211. When pushing the material, when the annular wall body 211 is unilaterally stressed, each pulley structure 22 acts to prevent waggling and eccentric rotation of the annular wall body 211, so as to prevent eccentricity and waggle of the material pushing machine 100, and ensuring the reliability and stability of the material pushing machine 100.

Preferably, the mounting body 221 of each pulley structure 22 is mounted to a lower end of each support column 112, so the pulley structures 22 resists the annular wall body 211 at the lower end of the annular wall body 211. When pushing the material, each pulley structure 22 prevents waggles and eccentric rotation of the annular wall body 211.

Optionally, the annular wall body 211 of each pulley structure 22 is mounted to the base plate 111, so the pulley structures 22 may resist the annular wall body 211 at the lower end of the annular wall body 211. When the material pushing machine 100 is pushing the material, when the annular wall body 211 is unilaterally stressed, each pulley structure 22 may prevent waggles of the annular wall body 211.

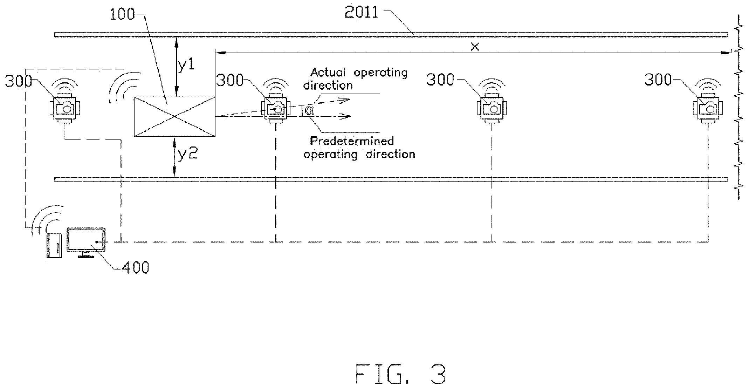

Preferably, a quantity of the pulley structures 22 and a quantity of the support columns 112 is same, such as in the material pushing machine 100 as shown in FIGS. 3A to 8B, the quantity of the pulley structures 22 and the quantity of the support columns 112 are four, the lower end of each support column 112 carries one pulley structure 22.

Referring to FIGS. 6A to 11B, the material pushing device 20 further includes a circular orbit 23. The circular orbit 23 is arranged on the annular wall body 211 such that the circular orbit 23 seats to an internal wall of the annular wall body 211, so the circular orbit 23 may strengthen the annular wall body 211 to maintain a perfect roundness and circularity of the annular wall body 211. The pulley body 222 of each pulley structure 22 seats to a smooth surface of the circular orbit 23 to resist the annular wall body 211. Thus, when the annular wall body 211 is rotated relative to the holding assembly 11, the pulley body 222 of each pulley structure 22 may roll on the smooth surface of the circular orbit 23, so as to reduce noise caused by friction between the pulley structures 22 and the circular orbit 23, thus the material pushing machine 100 is more silent.

Referring to FIGS. 6A to 11B, the material pushing wall 21 includes at least two roller half bodies 210. Each roller half body 210 includes a roller wall 2101 and an extending arm 2102 extended from an upper end of the roller wall 2101. The roller walls 2101 of adjacent roller half bodies 210 may be mounted to each other, after the roller half bodies 210 are mounted, the roller wall 2101 of each roller half body 210 forms the annular wall body 211, the extending arm 2102 of each roller half body 210 forms the connecting arm 212.

Particularly, the material pushing wall 21 includes two roller half bodies 210, one of the two roller half bodies 210 is defined as first roller half body 210a, the other of the two roller half bodies 210 is defined as second roller half body 210b. Each of the first roller half body 210a and the second roller half body 210b includes one roller wall 2101 and one extending arm 2102. The roller wall 2101 of the first roller half body 210a and the roller wall 2101 of the second roller half body 210b are mounted to each other to form the annular wall body 211, the extending arm 2102 of the first roller half body 210a and the extending arm 2102 of the second roller half body 210b form the connecting arm 212. Correspondingly, the circular orbit 23 includes a first circular orbit 23a and a second circular orbit 23b. The first circular orbit 23a is arranged on the roller wall 2101 of the first roller half body 210a, the second circular orbit 23b is arranged on the roller wall 2101 of the second roller half body 210b. After the roller wall 2101 of the first roller half body 210a and the roller wall 2101 of the second roller half body 210b are mounted to each other to form the annular wall body 211, the first circular orbit 23a and the second circular orbit 23b form a complete circular orbit 23.

Referring to FIGS. 6A to 11B, the material pushing machine 100 further includes a magnetic sensor 30. The magnetic sensor 30 is arranged on a lower portion of the base plate 111. The magnetic sensor 30 is capable of communicating with magnetic navigation markers lying outside the fold yard, for guiding the walking device 10 to move along a path.

Referring to FIGS. 6A to 11B, the material pushing machine 100 further includes a cover device 40. The cover device 40 includes a cover 41. A center position of the cover 41 is mounted to the free end 1150 of the mounting column 115, so the cover 41 may be supported by the holding assembly 11. A periphery of the cover 41 extends outwardly, thus a diameter of the cover 41 is greater than the periphery of the annular wall body 211, so the cover 41 protects and shields an upper portion of the annular wall body 211.

The cover device 40 further includes a hold pole 42 and a distance sensor 43 arranged on an end of the hold pole 42. The other end of the hold pole 42 is arranged to the cover 41. The distance sensor 43 may obtain a distance between the material pushing machine 100 and the fold yard for adjusting the distance between the material pushing machine 100 and the fold yard when adjustment is required. Preferably, the hold pole 42 is rotatably mounted to the cover 41 for adjusting an angle between the hold pole 42 and the cover 41. For instance, when the material pushing machine 100 is in operation, the hold pole 42 may rotate related to the cover 41, so the hold pole 42 and the cover 41 may have a greater angle, and so as to adjust the distance between the distance sensor 43 and the fold yard. Preferably, the hold pole 42 is an expansion pole, that is, a length of the hold pole 42 may be adjusted, thus, through adjusting the length of the hold pole 42 and the angle between the hold pole 42 and the cover 41, the distance between the distance sensor 43 and the fold yard may be adjusted conveniently and flexibly. Preferably, the cover 41 includes a maintain groove 411 for receiving the hold pole 42.

Furthermore, the mounting column 115 is a cylindrical or hollow mounting column, that is, the mounting column 115 includes a connected channel 1151 for connecting the second receiving space 1102 and the external space of the upper holding platform 114. Cables connected to the distance sensor 43 may be extended from the external space of the upper holding platform 114 to the second receiving space 1102 through the connected channel 1151.

Referring to FIGS. 6A to 11B, the cover device 40 further includes a charging port 44. The charging port 44 is arranged on the cover 41, cables connected to the charging port 44 may be extended from the external space of the upper holding platform 114 to the second receiving space 1102 through the connected channel 1151.

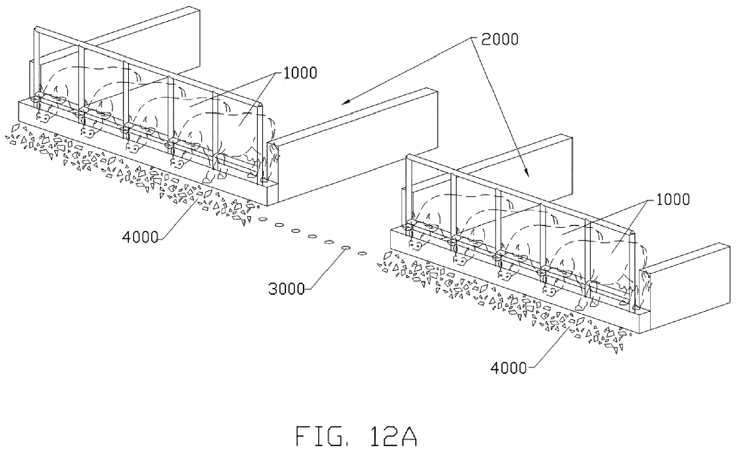

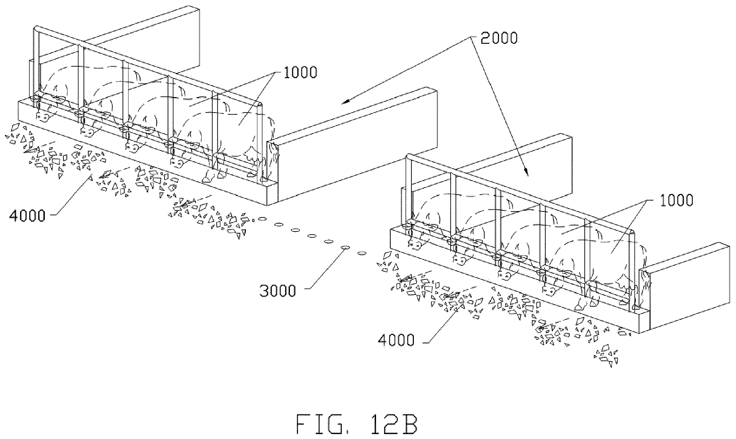

FIGS. 12A to 12F illustrate an operation process of the material pushing machine 100. A number of cows 1000 are in a same fold yard 2000, there is at least one magnetic navigation path 3000 arranged between adjacent fold yards 2000, food 4000, such as forage, is arranged outside of the fold yard 2000 for consumption by the cows 1000 in the fold yard 2000.

Referring to FIGS. 12A to 12B, when the cows 1000 in the fold yard 2000 may stretch out of the fold yard 2000 to eat the food 4000, the cows 1000 may, in act of eating, push the food 4000 away from the fold yard 2000, in such situation, the cows 1000 may not reach and eat all the food 4000.

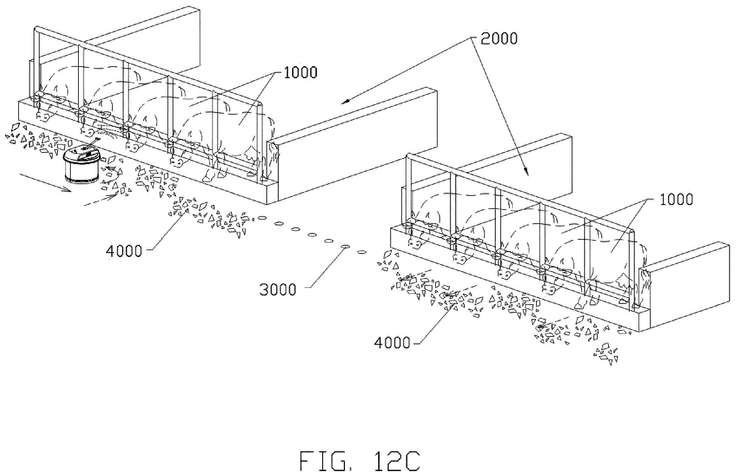

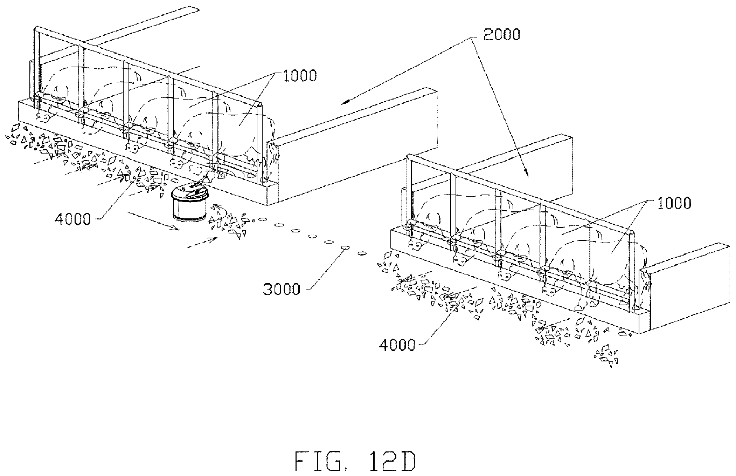

Referring to FIGS. 12C and 12D, the material pushing machine 100 is used for pushing distant food 4000 towards the fold yard 2000, for being reached by the cows 1000 in the fold yard 2000. Particularly, when the walking device 10 is moving, the annular wall body 211 of the material pushing device 20 may be rotated relative to the holding assembly 11, so the annular wall body 211 may push back the food 4000 closer towards the fold yard 2000, for being reached by the cows 1000 in the fold yard 2000. During the process, the distance sensor 43 may detect the distance between the material pushing machine 100 and the fold yard 2000 in real time, to ensure the food 4000 is correctly replaced closer to the fold yard 2000.

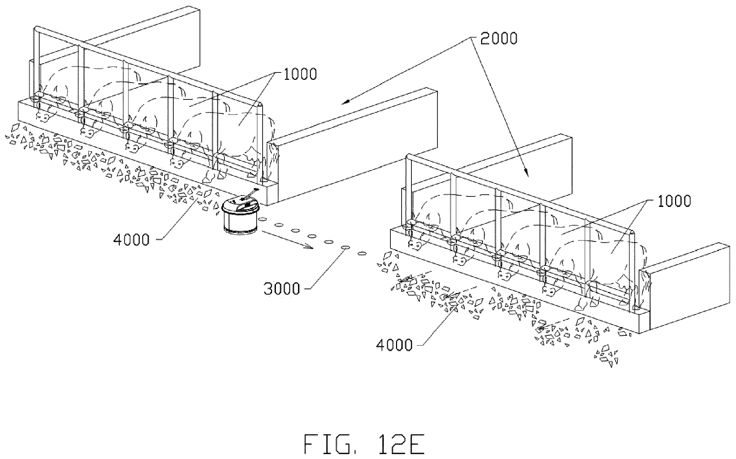

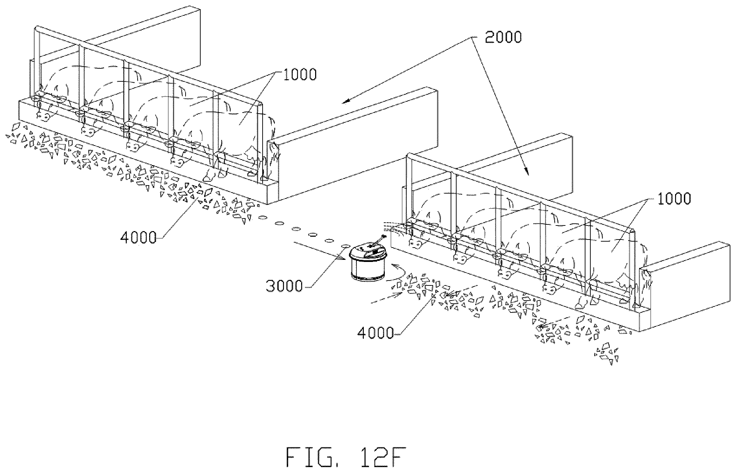

Referring to FIGS. 12E and 12F, when the material pushing machine 100 needs to move from one position of the fold yard 2000 to another position of the fold yard 2000, the magnetic sensor 30 and the magnetic navigation path 3000 may cooperatively and correctly guide the material pushing machine 100 to move from one position of the fold yard 2000 to another position of the fold yard 2000.

In another hand of the present disclosure, a material pushing method of the material pushing machine 100 is provided, the material pushing method includes the following:
(a) allowing the walking device 10 to move along a path outside the fold yard 2000; and
(b) allowing the annular wall body 211 being driven to rotate related to the holding assembly 11 in a way of surrounding the holding assembly 11, so the annular wall body 211 may push or brush or throw displaced food 4000 closer to the fold yard 2000.

In one embodiment, in the process (a), the path is predetermined, such as arranging magnetic guiding elements in advance outside the fold yard 2000 to form the magnetic navigation path 3000, so the magnetic navigation path 3000 may indicate the predetermined path. In another embodiment, in the process (a), the distance sensor 43 detects the distance between the material pushing machine 100 and the fold yard 2000 in real time and plans and executes the path in real time.

In one embodiment, in the process (b), when the walking device 10 moves along the path and the material pushing machine 100 pushes the food 4000, friction generated between the food 4000 and the annular wall body 211 may drive the annular wall body 211 to rotate related to the holding assembly 11, thus the annular wall body 211 surrounds the holding assembly 11 to push the food 4000. In another embodiment, in the process (b), the material pushing drive motor 17 drives the annular wall body 211 to rotate relative to the holding assembly 11, so the annular wall body 211 surrounds the holding assembly 11 to push the food 4000.

Preferably, when the material pushing drive motor 17 drives the annular wall body 211 to rotate related to the holding assembly 11 at the upper end of the annular wall body 211, the at least two circular orbits 23 which are inside resist the annular wall body 211 at the internal of the annular wall body 211, so as to prevent eccentricity and waggling when the annular wall body 211 unilaterally suffers resistance from the mass of the food 4000, and ensuring the reliability and stability of the material pushing machine 100.

Those skilled in the art should understand that the above description and the embodiments of the present disclosure shown in the drawings are only examples and do not limit the present disclosure. The purpose of the present disclosure has been completely and effectively achieved. The functions and structural principles of the present disclosure have been shown and explained in the embodiments. Without departing from the principles, the implementation of the present disclosure may have any deformation or modification.

## Claims

1. An indoor navigating system based on vision, comprising:
an image capturing unit configured to capture a material channel image;
an image segmenting unit configured to segment the material channel image to obtain a material pushing machine and a walkable area from the material channel image, and determine boundaries of the material pushing machine and boundaries of the walkable area;
a position obtaining unit configured to obtain a distance between a left boundary of the material pushing machine and a left rail of a material channel and/or a distance between a right boundary of the material pushing machine and a right rail of the material channel;
a course angle obtaining unit configured to, based on the distance between the left boundary of the material pushing machine and the left rail of the material channel and/or the distance between the right boundary of the material pushing machine and the right rail of the material channel, obtain a lateral deviation distance of the material pushing machine, and obtain a course angle based on the lateral deviation distance; and
a controlling unit configured to, based on the course angle, adjust an actual moving direction of the material pushing machine.

2. The indoor navigating system according to claim 1, wherein the position obtaining unit is further configured to obtain a distance between a front boundary of the material pushing machine and a front boundary of the material channel, the controlling unit compares the distance between the front boundary of the material pushing machine and the front boundary of the material channel with a predetermined distance, and controls an operating status of the material pushing machine according to a comparing result.

3. The indoor navigating system according to claim 1, wherein the image segmenting unit determine the boundaries of the material pushing machine and the boundaries of the walkable area through pixel searching.

4. The indoor navigating system according to claim 1, wherein the image capturing unit captures the material channel image through at least one camera device, the position obtaining unit obtains the distance between the left boundary of the material pushing machine and the left rail of the material channel and/or the distance between the right boundary of the material pushing machine and the right rail of the material channel according to a height of the camera device, an intersection angle of an optical axis of the camera device and a ground, and parameters of the camera device.

5. The indoor navigating system according to claim 4, wherein the position obtaining unit, according to a space between neighboring camera devices, determines the camera device for obtaining the distance between the left boundary of the material pushing machine and the left rail of the material channel and/or the distance between the right boundary of the material pushing machine and the right rail of the material channel.

6. The indoor navigating system according to any one of claims 1 to 5, wherein the material pushing machine comprises a walking device and a material pushing device, the walking device comprises a holding assembly, a power supply assembly, two walking drive motors, two drive wheels, and a supporting wheel, the holding assembly comprises a base plate, the power supply assembly is arranged on and supported by the base plate, each of the walking drive motors is arranged on one of opposite ends of the base plate, and each of the walking drive motors is electrically connected to the power supply assembly, each of the drive wheels is connected to each of the walking drive motors, the supporting wheel is mounted in a middle of the base plate on another side, the material pushing device comprises a material pushing wall, the material pushing wall comprises an annular wall body and a connecting arm extending from a top to a middle of the annular wall body, the connecting arm is connected to the holding assembly, and the annular wall body rotatably surrounds the holding assembly.

7. The indoor navigating system according to claim 6, wherein the holding assembly comprises at least two support columns, a holding platform, a mounting column, and a drive ring; each of the at least two support columns is extended from an edge of the base plate to a predetermined height, the holding platform is arranged on a top end of the each of the at least two support columns, a receiving space is formed between the base plate and the holding platform for receiving the power supply assembly, the mounting column is arranged from a center position of the holding platform extending upwardly, the drive ring is rotatably mounted to the mounting column, the connecting arm is connected to the drive ring.

8. The indoor navigating system according to claim 6, wherein the material pushing device further comprises at least two pulley structures, each of the at least two pulley structures comprises a mounting body and a pulley body rotatably mounted on the mounting body, the pulley body outwardly resists to an interior of the annular wall body, so each of the at least two pulley structures is mounted to the holding assembly.

9. The indoor navigating system according to claim 6, wherein the material pushing machine further comprises a cover device, wherein the cover device comprises a cover, the cover is mounted on the holding assembly, a periphery of the cover extends outwardly, a diameter of the cover is greater than the periphery of the annular wall body.

10. An indoor navigating method based on vision, comprising:
(a) capturing a material channel image;
(b) segmenting the material channel image to obtain a material pushing machine and a walkable area from the material channel image, and determining boundaries of the material pushing machine and boundaries of the walkable area;
(c) obtaining a distance between a left boundary of the material pushing machine and a left rail of a material channel and/or a distance between a right boundary of the material pushing machine and a right rail of the material channel;
(d) obtaining a lateral deviation distance of the material pushing machine, and determining a course angle; and
(e) adjust an actual moving direction of the material pushing machine according to the course angle.

11. The indoor navigating method according to claim 10, further comprising:
(f) obtaining a distance between a front boundary of the material pushing machine and a front boundary of the material channel; and
(g) comparing the distance between the front boundary of the material pushing machine and the front boundary of the material channel with a predetermined distance, when determining that the distance between the front boundary of the material pushing machine and the front boundary of the material channel is greater than the predetermined distance, controlling the material pushing machine to continuously operate, when determining that the distance between the front boundary of the material pushing machine and the front boundary of the material channel is less than the predetermined distance, controlling the material pushing machine to turn direction or stop operating.

12. The indoor navigating method according to claim 10, wherein in the step (b), determining the boundaries of the material pushing machine and the boundaries of the walkable area through pixel searching.

13. The indoor navigating method according to claim 10, wherein in the step (a), capturing the material channel image through at least one camera device; in the step (c), obtaining the distance between the left boundary of the material pushing machine and the left rail of the material channel and/or the distance between the right boundary of the material pushing machine and the right rail of the material channel according to a height of the camera device, an intersection angle of an optical axis of the camera device and a ground, and parameters of the camera device.

14. The indoor navigating method according to claim 13, wherein in the step (c), according to a space between neighboring camera devices, determines the camera device for obtaining the distance between the left boundary of the material pushing machine and the left rail of the material channel and/or the distance between the right boundary of the material pushing machine and the right rail of the material channel.
